# FASCICULE DE BREVET EUROPEEN

(11) **EP 1 033 929 B1**
(45) Date de publication et mention de la délivrance du brevet: **12.06.2002**
(21) Numéro de dépôt: 98956966.0
(22) Date de dépôt: 25.11.1998
(51) Int. Cl.: A47J 37/12

(54) **APPAREIL ELECTRIQUE DE CUISSON, EN PARTICULIER FRITEUSE, COMPORTANT UN ELEMENT CHAUFFANT PLAT A RESISTANCE SERIGRAPHIEE**
ELEKTRISCHES KOCHGERÄT, INSBESONDERE EIN FRITIERGERÄT, MIT EINEM FLACHEN HEIZELEMENT MIT DURCH SIEBDRUCK HERGESTELLTEM WIDERSTAND
ELECTRICAL COOKING APPLIANCE, IN PARTICULAR DEEP FRYER, COMPRISING A FLAT HEATING ELEMENT WITH SCREEN-PRINTED RESISTOR

(30) Priorité: 28.11.1997 FR 9715048
(43) Date de publication de la demande: 13.09.2000
(73) Titulaire: MOULINEX S.A., 14123 Cormelles le Royal (FR); Busquets, Jean-Pierre, 14780 Lion-sur-Mer (FR)
(72) Inventeur: BUSQUETS, Jean-Pierre, F-14780 Lion-sur-Mer (FR); BOIS, Bernard, La Folie Couvrechef, F-14000 Caen (FR)
(74) Mandataire: Busquets, Jean-Pierre
(86) Numéro de dépôt international: FR9802547
(87) Numéro de publication internationale: WO9927829

(56) Documents cités:
- DE-A- 4 418 239
- GB-A- 2 253 551
- US-A- 4 843 218

## Description

La présente invention se rapporte aux appareils électriques de cuisson d'aliments qui comportent, dans un boîtier, une cuve de cuisson en tôle recouverte sur ses faces interne et externe d'un revêtement résistant à la chaleur, montée fixe ou amovible, et des moyens de chauffage électrique associés à la cuve et comprenant un élément chauffant plat à résistance électrique sérigraphiée.

Elle s'applique notamment mais non exclusivement aux friteuses électriques destinées à la cuisson, dans un bain d'huile en particulier, d'aliments tels que des frites, des poissons ou de la viande.

On sait que pour de tels appareils de cuisson d'aliments, la cuve de cuisson est généralement réalisée par emboutissage d'une plaque de tôle en aluminium ou en acier, et est ensuite recouverte intérieurement et extérieurement d'un revêtement résistant à la chaleur, en général de l'émail. Comme cela est bien connu, un tel revêtement d'émail appliqué sur les faces interne et externe de la cuve de cuisson en tôle, que cette dernière soit montée fixe ou amovible dans le boîtier de l'appareil, permet avantageusement de faciliter le nettoyage de la cuve, d'empêcher l'oxydation de la tôle, et d'éviter l'adhérence des aliments sur la surface intérieure de la cuve.

Dans un appareil de cuisson connu de ce genre, l'élément chauffant plat à résistance électrique sérigraphiée est rapporté par sertissage dans une découpe pratiquée dans le fond de la cuve en tôle émaillée. Bien que cette solution permette de remédier à la difficulté résidant à ce jour dans l'incapacité technique de sérigraphier un élément chauffant sur une plaque de tôle, elle n'en demeure pas moins complexe et onéreuse tant sur le plan de la fabrication de la cuve de cuisson que sur le plan du mode de fixation de l'élément chauffant.

L'invention a notamment pour but de remédier à ces inconvénients et de réaliser un appareil électrique de cuisson, du type exposé ci-dessus, qui soit de conception simplifiée et de fabrication peu coûteuse, tout en conservant les avantages procurés par la résistance sérigraphiée de chauffage, tels que notamment une montée en température très rapide de la cuve de cuisson et une bonne homogénéité de la répartition de la température de chauffage.

Selon l'invention, la face externe du fond de la cuve présente une zone qui est dépourvue du revêtement et sur laquelle est rapporté l'élément chauffant plat.

Ainsi, le fait d'exempter de revêtement cette zone externe du fond de la cuve pour y fixer l'élément chauffant plat ne modifie guère la fabrication d'une cuve de cuisson classique en tôle recouverte intérieurement et extérieurement de ce revêtement, telle qu'une cuve en tôle émaillée, et permet également de réaliser une économie substantielle sur la matière constituant le revêtement de la cuve, en particulier pour une fabrication en grande série.

Selon un mode d'exécution préféré, l'élément chauffant plat est rapporté par soudage ou collage sur la zone dépourvue du revêtement.

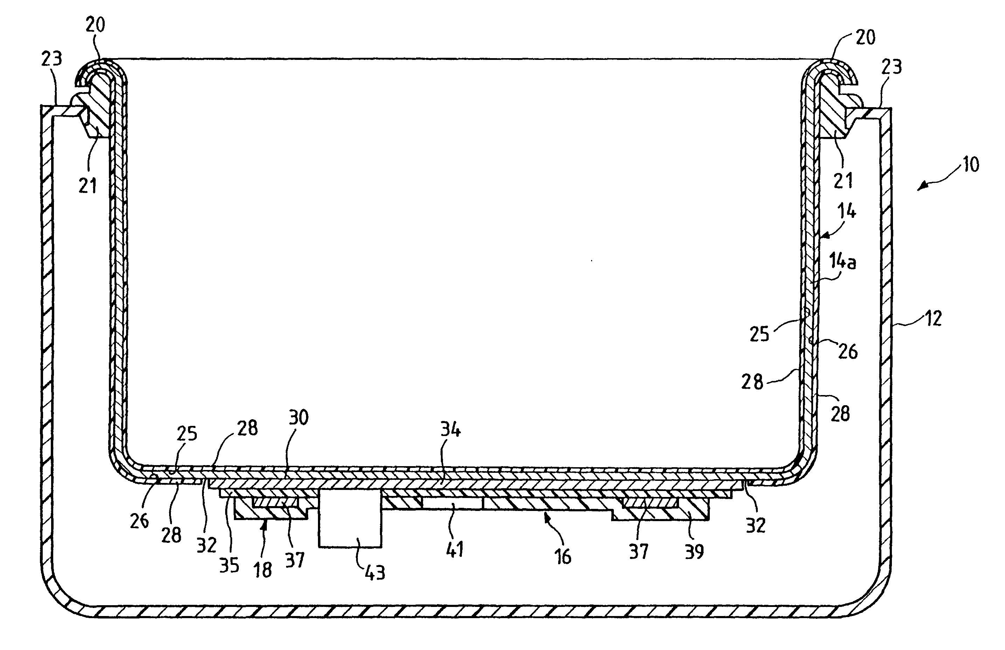

Les caractéristiques et avantages de l'invention ressortiront d'ailleurs de la description qui va suivre, à titre d'exemple non limitatif, en référence au dessin annexé dont la figure unique est une vue schématique simplifiée en coupe transversale d'un appareil électrique de cuisson selon l'invention, comportant un élément chauffant plat à échelle agrandie.

Dans l'exemple de réalisation représenté sur la figure, l'appareil électrique de cuisson d'aliments 10 est une friteuse électrique, par exemple de forme générale rectangulaire, comportant, dans un boîtier 12 réalisé en une matière plastique telle que, par exemple, le polypropylène, une cuve rectangulaire 14 montée fixe ou amovible et destinée à contenir un bain de cuisson (non représenté) constitué, par exemple, par de l'huile, ainsi que des moyens de chauffage électrique, désignés par le repère général 16, associés à la cuve 14 et comprenant, comme on le décrira en détail par la suite, un élément chauffant plat 18 à résistance électrique sérigraphiée.

Dans une réalisation préférentielle illustrée sur la figure, la cuve de cuisson 14 est montée amovible dans le boîtier 12, et à cet effet, repose en appui par son bord périphérique supérieur 20 sur une pluralité de supports 21 montés fixes sur le bord périphérique supérieur 23 du boîtier 12 et réalisés en une matière thermiquement isolante résistant aux températures d'utilisation de la friteuse.

En regard de la figure, la cuve rectangulaire 14 est une pièce en tôle emboutie 14a, en aluminium ou en acier, qui est recouverte sur ses faces internes 25 et externes 26 d'un revêtement 28 résistant à la chaleur, tel que par exemple de l'émail.

Selon l'invention, la face externe 26 du fond plat 30 de la cuve 14 présente une zone 32 qui est dépourvue du revêtement 28, donc sans émail dans cet exemple, et sur laquelle est rapporté l'élément chauffant plat 18.

D'une manière classique, cette zone externe non émaillée 32 est obtenue au moyen d'un masque appliqué lors de l'opération d'émaillage de l'intérieur et de l'extérieur de la cuve.

Dans l'exemple de réalisation illustré sur la figure, la zone non émaillée 32, c'est-à-dire en tôle, de la face externe 26 du fond 30 de la cuve constitue la majeure partie de cette face externe 26 du fond de la cuve 14.

L'élément chauffant plat 18 est rapporté sur la zone externe non émaillée 32 du fond 30 de la cuve par tout moyen de fixation approprié, et de préférence par soudage ou collage.

Selon un mode d'exécution préférentiel illustré sur la figure, l'élément chauffant plat 18 est de faible épaisseur et comporte une plaque en acier inoxydable 34 fixée sur la zone externe non émaillée 32 du fond 30 de la cuve 14, au moins une couche 35 en matière électriquement isolante déposée par sérigraphie sur la plaque 34, et au moins une piste résistive 37 qui est sérigraphiée sur pratiquement toute la surface de la couche 35 suivant un tracé de courbes imbriquées les unes dans les autres, et qui est protégée par une autre couche 39 en matière électriquement isolante déposée par sérigraphie. On a représenté en 41 sur la figure l'une des deux pastilles conductrices sur laquelle est fixée l'une des deux connexions électriques (non représentées) de l'élément chauffant, et qui est également déposée par sérigraphie sur la couche 35.

Cet élément chauffant plat 18 comporte en outre un moyen de régulation thermique 43, tel qu'un thermostat, qui est monté sur la face inférieure de la plaque 34 (en position illustrée sur la figure) au moyen d'organes de fixation appropriés, tels que par exemple des vis.

L'élément chauffant plat 18 peut également comporter plusieurs pistes résistives sérigraphiées 37 de différentes puissances qui sont alimentées séparément au moyen d'un organe de commutation (non représenté) de manière à sélectionner la puissance de chauffage appropriée suivant le type d'aliment à cuire.

Grâce à l'absence d'émail dans la zone externe 32 du fond 30 de la cuve 14, l'élément sérigraphié de chauffage 18 est donc fixé d'une manière simple sur cette zone 32, et partant, fournit une forte puissance thermique localisée répartie rapidement et uniformément sous le fond de la cuve 14, assurant une montée en température très rapide de la cuve. En outre, la conductibilité thermique transversale de la résistance 37 sérigraphiée sur la plaque en acier inoxydable 34 est très faible, ce qui permet avantageusement de limiter les risques d'échauffements sur les parois latérales de la cuve 14.

On a donc réalisé suivant l'invention un appareil électrique de cuisson d'aliments, en particulier une friteuse, qui est particulièrement avantageux tant du point de vue de son efficacité thermique que du point de vue de sa conception simplifiée.

## Revendications

1. Appareil électrique de cuisson, comportant, dans un boîtier (12), une cuve de cuisson en tôle (14) recouverte sur ses faces interne (25) et externe (26) d'un revêtement (28) résistant à la chaleur, montée fixe ou amovible, et des moyens de chauffage électrique (16) associés à la cuve (14) et comprenant un élément chauffant plat (18) à résistance électrique sérigraphiée (37),
**caractérisé en ce que** la face externe (26) du fond (30) de la cuve (14) présente une zone (32) qui est dépourvue dudit revêtement (28) et sur laquelle est rapporté l'élément chauffant plat (18).

2. Appareil selon la revendication 1,
**caractérisé en ce que** la zone (32) de la face externe (26) du fond (30) de la cuve qui est dépourvue du revêtement (28) constitue la majeure partie de cette face externe (26).

3. Appareil selon la revendication 1 ou 2,
**caractérisé en ce que** l'élément chauffant plat (18) est rapporté par soudage ou collage sur la zone (32) dépourvue du revêtement (28).

4. Appareil selon l'une quelconque des revendications précédentes,
**caractérisé en ce qu'**il est constitué par une friteuse (10).

## Patentansprüche

1. Elektrisches Kochgerät, das in einem Gehäuse (12) ein Kochgefäß aus Blech (14) aufweist, das an seiner Innenseite (25) und Außenseite (26) mit einer wärmebeständigen Beschichtung (28) beschichtet und fest oder abnehmbar montiert ist und eine mit dem Gefäß (14) zusammenwirkende elektrische Heizvorrichtung (16) mit einem flachen Heizelement (18) mit durch Siebdruck hergestelltem elektrischem Widerstand (37) aufweist, **dadurch gekennzeichnet, daß** die Außenseite (26) des Bodens (30) des Gefäßes (14) einen Bereich (32) aufweist, der frei von der Beschichtung (28) ist und auf dem das flache Heizelement (18) angebracht ist.

2. Gerät nach Anspruch 1, **dadurch gekennzeichnet, daß** der Bereich (32) der Außenseite (26) des Bodens (30) des Gefäßes, der frei von Beschichtung (26) ist, den Hauptteil dieser Außenseite (26) bildet.

3. Gerät nach Anspruch 1 oder 2, **dadurch gekennzeichnet, daß** das flache Heizelement (18) durch Schweißen oder Kleben auf dem von Beschichtung (28) freien Bereich (32) angebracht ist.

4. Gerät nach einem der vorangehenden Ansprüche, **dadurch gekennzeichnet, daß** es aus einem Fritiergerät (10) besteht.

## Claims

1. Electric cooking appliance comprising, in a casing (12), a sheet metal cooking vessel (14) covered on its internal (25) and external (26) faces with a heat-resistant cladding (28), mounted so as to be fixed or removable, and electrical heating means (16) associated with the vessel (14) and comprising a flat heating component (18) with a screen-printed electrical element (37), **characterised in that** the external face (26) of the bottom (30) of the vessel (14) has an area (32) which does not have the said cladding (28) and to which the flat heating component (18) is attached.

2. Appliance according to Claim 1, **characterised in that** the area (32) of the external face (26) of the bottom (30) of the vessel which has no cladding (28) constitutes the major part of this external face (26).

3. Appliance according to Claim 1 or 2, **characterised in that** the flat heating component (18) is attached by welding or adhesive bonding to the area (32) with no cladding (28).

4. Appliance according to any one of the preceding claims, **characterised in that** it consists of a deep fryer (10).
